# EUROPEAN PATENT SPECIFICATION

(11) **EP 4 410 520 B1**
(45) Date of publication and mention of the grant of the patent: **13.05.2026**
(21) Application number: 24153890.9
(22) Date of filing: 25.01.2024
(51) Int. Cl.: B29C 65/00, B65B 51/30, B29C 65/02, B65B 9/20, B65B 9/207, B65B 9/22, B29C 65/08, B29C 65/34, B29C 65/36, B29K 705/02, B29L 31/00

(54) **PACKAGE FORMING APPARATUS FOR A PACKAGING MACHINE AND PACKAGING MACHINE FOR FORMING PACKAGES FILLED WITH A POURABLE PRODUCT**
VERPACKUNGSFORMVORRICHTUNG FÜR EINE VERPACKUNGSMASCHINE UND VERPACKUNGSMASCHINE ZUM FORMEN VON MIT EINEM FLIESSFÄHIGEN PRODUKT GEFÜLLTEN VERPACKUNGEN
APPAREIL DE FORMATION D'EMBALLAGES POUR UNE MACHINE D'EMBALLAGE ET MACHINE D'EMBALLAGE POUR FORMER DES EMBALLAGES REMPLIS D'UN PRODUIT VERSABLE

(30) Priority: 01.02.2023 IT 202300001560
(43) Date of publication of application: 07.08.2024
(73) Proprietor: Tetra Laval Holdings & Finance S.A., 1009 Pully (CH)
(72) Inventor: POPPI, Marco, 41123 Modena (IT); ORSINI, Ivan, 41123 Modena (IT); FERRARI, Fabio, 41123 Modena (IT); DE PIETRI TONELLI, Roberto, 41123 Modena (IT)
(74) Representative: Tetra Pak Patent Attorneys

(56) References cited:
- EP-A1- 0 049 978
- WO-A2-2010/064093
- US-A- 3 008 278
- US-A- 3 050 916
- US-A- 4 637 199

## Description

### TECHNICAL FIELD

The present invention relates to a package forming apparatus for a packaging machine for forming packages filled with a pourable product, preferentially a pourable food product.

Advantageously, the present invention also relates to a packaging machine for forming packages filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus configured to form, transversally seal and cut individual packages from the tube of packaging material.

The packaging forming apparatus comprises at least one operative device configured to at last partially form and to transversally seal and cut the tube and a support structure movably carrying the operative device.

The support structure comprises a first guide, a second guide spaced apart from the first guide and a support device movably coupled to the first guide and the second guide and carrying the operative device.

Moreover, the support device comprises a first coupling structure and a second coupling structure coupling the support device to the first guide and the second guide respectively. In use, the first coupling structure and the second coupling structure move back and forth along the first guide and the second guide, respectively. By providing for the first coupling structure and the second coupling structure being coupled to the first guide and the second guide, respectively, it is possible to allow for a guided linear movement of the operative devices avoiding any rotational movement.

The first coupling structure comprises a hollow shell surrounding and being movable along the first guide. The second coupling structure comprises a first sliding surface and a second sliding surface engaging the second guide from opposite sides thereof.

Package forming apparatuses are disclosed in US3050916A, US3008278A, EP0049978A1, US4637199A, WO2010/064093A2.

Even though the known package forming apparatuses and/or packaging machines work satisfactorily well, a desire is felt in the sector to further improve the known package forming apparatuses and/or the known packaging machines.

### DISCLOSURE OF INVENTION

It is therefore an object of the present invention to provide an improved package forming apparatus.

Additionally, it is an object of the present invention to provide an improved packaging machine.

According to the present invention, there is provided a package forming apparatus as claimed in claim 1.

Preferred non-limiting embodiments of the package forming apparatus are claimed in the claims being directly and indirectly dependent on claim 1.

According to the present invention, there is also provided a packaging machine according to claim 15.

### BRIEF DESCRIPTION OF THE DRAWINGS

A non-limiting embodiment of the present invention will be described by way of example with reference to the accompanying drawings, in which:
Figure 1 is a schematic view of a packaging machine having a package forming apparatus according to the present invention, with parts removed for clarity;
Figure 2 is a schematic perspective view of a detail of the package forming apparatus of Figure 1, with parts removed for clarity;
Figure 3 is a perspective view of a detail of the package forming apparatus of Figure 1, with parts removed for clarity;
Figure 4A is an enlarged lateral view of a portion of the detail of Figure 3, with parts removed for clarity;
Figure 4B is a sectioned view of the portion of Figure 4A, with parts removed for clarity; and
Figure 5 is a lateral view of another portion of the detail of Figure 3, with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar, etc.

In more detail, packaging machine 1 may be configured to produce packages 2 from a multilayer packaging material. Preferentially, a multilayer packaging material having heat seal properties (i.e. portions of the multilayer packaging material can be sealed to one another) .

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. aluminum foil or ethylene vinyl alcohol (EVOH) film, preferentially being arranged between one of the layers of heat-seal plastic material and the layer of fibrous material.

Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Furthermore, packaging machine 1 may be configured to produce packages 2 by forming a tube 4 from web 3, longitudinally sealing tube 4, filling tube 4 with the pourable product and to transversally seal, and preferentially transversally cut tube 4.

According to some possible non-limiting embodiments, each package 2 may extend along a longitudinal axis A.

According to some possible embodiments, each package 2 may comprise at least a first transversal sealing band 5 arranged at a first end of package 2, and preferentially also a second transversal sealing band arranged at a second end of package 2 opposite to the first end.

Preferentially, each first transversal sealing band 5 may be substantially spaced apart from the respective second transversal sealing band along the respective longitudinal axis A.

Preferentially, each first transversal sealing band 5 may define a transversal top sealing band and each second transversal sealing band may define a transversal bottom sealing band.

Moreover, each package 2 may also comprise a longitudinal seam portion 6. Preferentially, each first transversal sealing band 5 and/or each second transversal sealing band may be transversal, preferentially perpendicular, to the respective longitudinal seam portion 6.

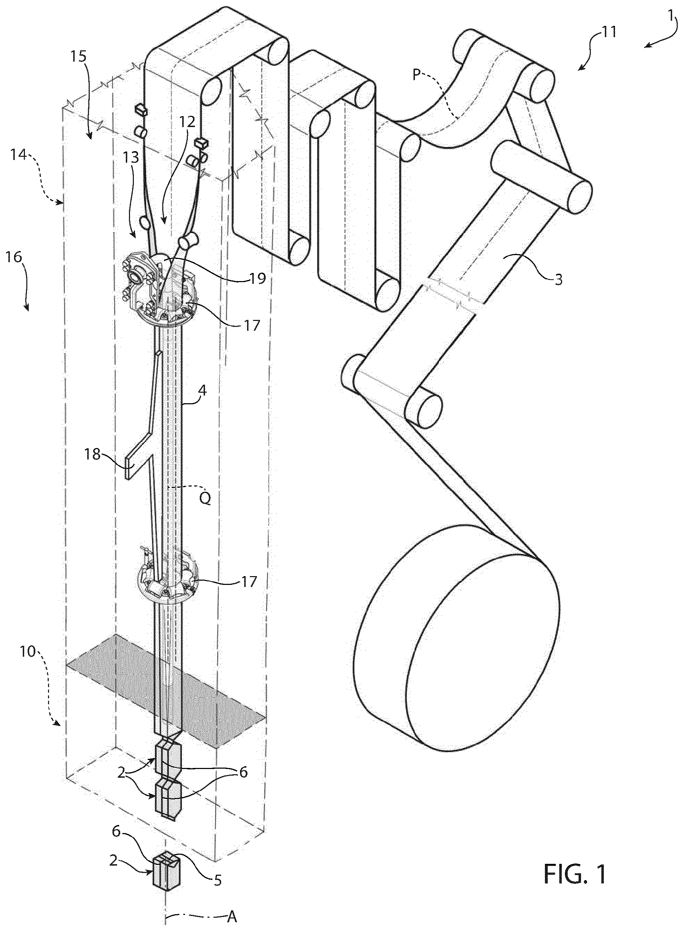

With particular reference to Figure 1, packaging machine 1 may comprise a package forming apparatus 10 configured to transversally seal, and preferentially to transversally cut tube 4 for obtaining packages 2. Preferentially, package forming apparatus 10 may also be configured to form tube 4.

Moreover, packaging machine 1 may also comprise:
- a conveying device 11 configured to advance web 3 along a web advancement path P, preferentially to a tube forming station, at which, in use, web 3 is formed into tube 4, and configured to advance tube 4 along a tube advancement path Q;
- a tube forming and sealing device 12 configured to form tube 4 from the, in use, advancing web 3 and to longitudinally seal tube 4; and
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and being configured to fold and longitudinally seal tube 4 within isolation chamber 14, in particular inner environment 15.

Moreover, packaging machine 1 may also comprise a sterilization unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along tube advancement path Q, preferentially from tube forming and sealing device 12 to and/or at least partially within package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 may have a vertical orientation.

More specifically, tube forming and sealing device 12 may comprise at least two forming ring assemblies 17, preferentially arranged within isolation chamber 14, even more preferentially arranged within inner environment 15, being configured to gradually fold in cooperation with one another web 3 into tube 4, preferentially by overlapping the edges of web 3 with one another. Thereby, in use, seam portion 6 of tube 4 may be formed.

Additionally, tube forming and sealing device 12 may comprise a sealing head 18, preferentially arranged within isolation chamber 14, even more preferentially within inner environment 15, and configured to longitudinally seal tube 4, preferentially along longitudinal seam portion 6.

Moreover, tube forming and sealing device 12 may also comprise a pressure assembly configured to exert a mechanical force on longitudinal seam portion 6 so as to ensure sealing of tube 4 along longitudinal seam portion 6.

Preferentially, filling device 13 may comprise a filling pipe 19 being configured to direct, in use, the pourable product into tube 4. Preferentially, filling pipe 19 may, in use, be at least partially placed within tube 4 for feeding, in use, the pourable product into tube 4.

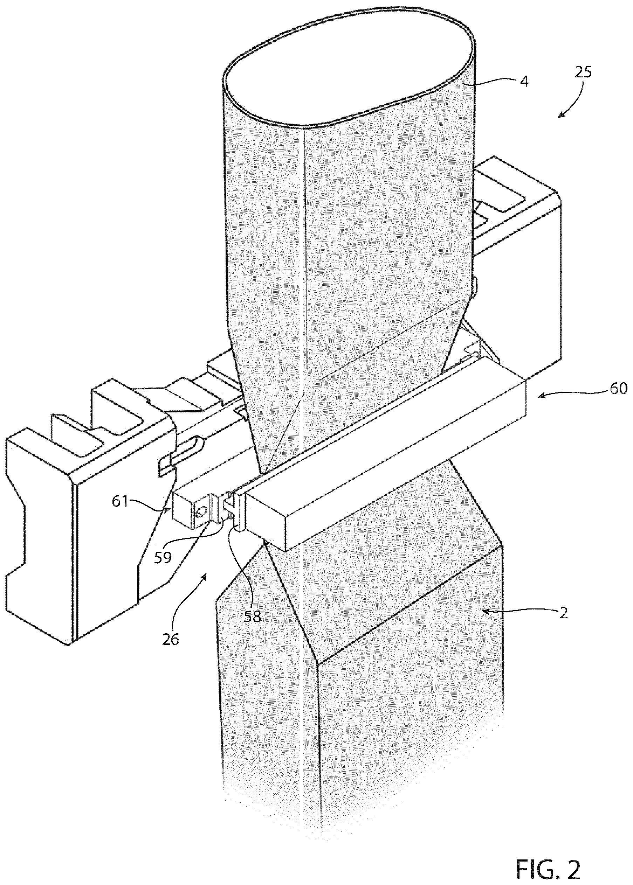

With particular reference to Figures 1 and 2, package forming apparatus 10 may comprise one or more, preferentially a plurality of, operative devices 25 (only partially shown to the extent necessary for the comprehension of the present invention), each one configured to at least transversally seal, and preferentially to transversally cut tube 4 and/or to form (shape) tube 4.

Moreover, package forming apparatus 10 may also comprise a conveying unit (not shown) configured to advance operative devices 25, preferentially along respective paths.

Preferentially, package forming apparatus 10 may be configured to control operative devices 25 and the conveying unit such to transversally seal and preferentially cut tube 4 along equally spaced transversal cross sections, preferentially thereby forming the respective first transversal sealing bands 5 and/or the respective second transversal sealing bands.

With particular reference to Figure 2, each operative device 25 may comprise at least one sealing assembly 26 configured to transversally seal tube 4, even more preferentially thereby forming a respective transversal main sealing band.

Additionally, each operative device 25 may comprise at least one cutting assembly configured to transversally cut tube 4. Preferentially, each cutting assembly may be configured to transversally cut tube 4 after sealing of tube 4 by means of the respective sealing assembly 26.

Even more preferentially, each cutting assembly may be configured to cut the respective transversal main sealing band, preferentially thereby forming one respective first transversal sealing band 5 and one respective second transversal sealing band. In other words, each transversal main sealing band comprises one respective first transversal sealing band 5 and one respective second transversal sealing band. More in particular, each transversal main sealing band may comprise one respective first transversal sealing band 5 of a first package 2 and one respective second transversal sealing band of a second package 2, the second package 2 being arranged downstream of the first package 2 along tube advancement path Q.

In further detail, each second transversal sealing band obtained after cutting by means of cutting assembly 26 may be part of a leading package 2 (with respect to tube advancement path Q) and each first transversal sealing band 5 may be part of a trailing package 2 (with respect to tube advancement path Q). In even further detail, after the execution of the cutting operation by means of the respective cutting assembly, the leading package 2 having the respective second transversal sealing band may be separated from tube 4, while the respective trailing package 2 having the respective first transversal sealing band 5 may be still attached to tube 4 (in particular, the respective trailing package 2 defines the end of tube 4 and defines then a new leading package 2).

According to some preferred non-limiting embodiments, each operative device 25 may also comprise a forming shell assembly (not shown and known as such) configured to form tube 4, preferentially to at least partially define the shape of packages 2.

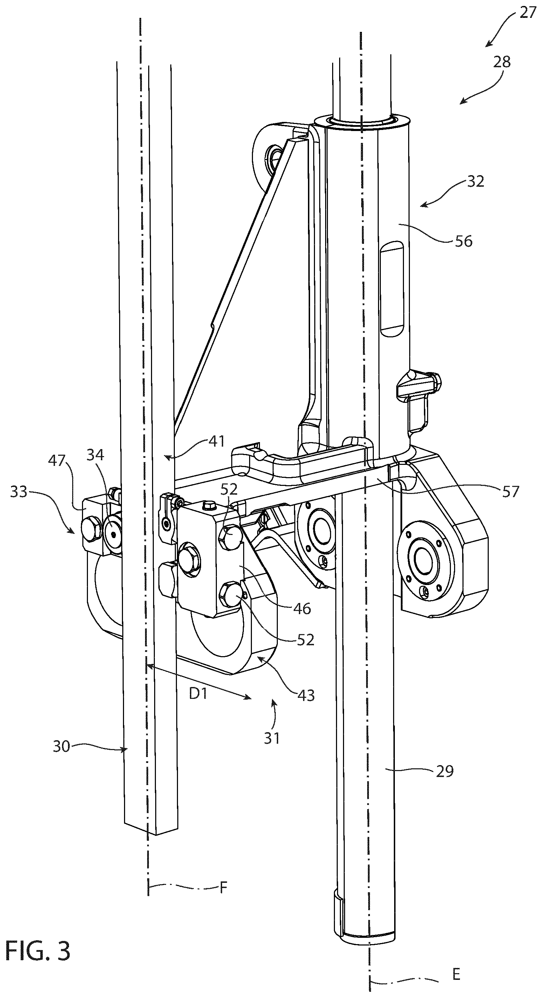

With particular reference to Figures 3 to 6, package forming apparatus 10 may comprise a support structure 27 movably carrying operative devices 25.

Support structure 27 may comprise one or more support assemblies 28 (only one shown), each one movably carrying at least one, preferentially exactly one, respective operative device 25.

According to some non-limiting embodiments, package forming apparatus 10 may comprise at least two, preferentially exactly two, operative devices 25, and support structure 27 may comprise at least two, preferentially exactly two, support assemblies 28.

Preferentially, support assemblies 28 may be spaced apart from one another.

Even more preferentially, support assemblies 28 may be arranged such that, in use, the advancing tube 4 may be interposed between support assemblies 28.

More specifically, support assembly 28 may define a space within which, in use, tube 4 advances.

Advantageously, each support assembly 28 may comprise a respective first guide 29 and a respective second guide 30 spaced apart from the respective first guide 29 and at least one respective support device 31 movably coupled to the respective first guide 29 and second guide 30 and carrying one respective operative device 25.

According to some preferred non-limiting embodiments, each support device 31 may comprise at least:
- a respective first coupling structure 32 and a respective second coupling structure 33 coupling support device 31 to the respective first guide 29 and the respective second guide 30, respectively.

Advantageously, each second coupling structure 33 may comprise at least a first wheel 34 rotatable about a first rotation axis B and one or more, preferentially at least two, even more preferentially exactly two, second wheels 35, each second wheel 35 being rotatable about a respective second rotation axis C.

In further detail, each first wheel 34 and the respective second wheel(s) 35 may be arranged such to contact second guide 30 from opposite sides thereof.

In other words, each first wheel 34 may contact a first face 40 of the respective second guide 30 and each second wheel 35 may contact a second face 41 of the respective second guide 30, in particular each second face 41 being opposite to the respective first face 40.

Moreover, in use, each first wheel 34 may run on the respective first face 40 and each second wheel 35 may run on the respective second face 41.

Advantageously, each second coupling structure 33 may also comprise one or more elastic elements 42, such as springs, each one coupled to one respective second wheel 35 and being configured to elastically couple the respective second wheel 35 to the respective second guide 30, preferentially the respective second face 41.

By providing for the first wheel 34, the at least one second wheel 35 and the elastic elements 42 it is possible to reduce the wear associated with movement of second coupling structures 33.

In further detail, in use, the conveying unit may actuate a movement, preferentially a linear movement, of support devices 31, preferably such to advance the respective operative devices 25 (in particular, along the respective paths).

Furthermore, movement of support devices 31 is determined by movement of the respective first coupling structures 32 and the respective second coupling structures 33 as determined by the interaction with the respective first guides 29 and the respective second guides 30.

In further detail, each second wheel 35, in particular at least partially thanks to the respective elastic element 42, may be linearly movable, preferentially along a movement direction D1, towards or away from the respective first wheel 34. In this manner, one guarantees contact of each second wheel 35 with the respective second guide 30, preferentially with a desired force.

With particular reference to Figures 3 to 5, each first guide 29 and each second guide 30 may (linearly) extend along a respective first central axis E and a respective second central axis F, respectively. Preferentially, each first central axis E and the respective second central axis F may be parallel to one another. According to the example shown, each first central axis E and each second central axis F may have a substantially vertical orientation.

Preferentially, each first guide 29 and the respective second guide 30 may be spaced apart along a respective direction perpendicular to first central axis E and second central axis F.

According to some preferred non-limiting embodiments, a cross-section of each first guide 29 with respect to a cross-sectional plane perpendicular to the respective first central axis E may be circular.

Additionally, or in addition, a cross-section of the respective second guide 30 with respect to a cross-sectional plane perpendicular to the respective second central axis F may be rectangular.

According to some preferred non-limiting embodiments, each movement direction D1 may be transversal, preferentially (substantially) perpendicular to, the respective second central axis F.

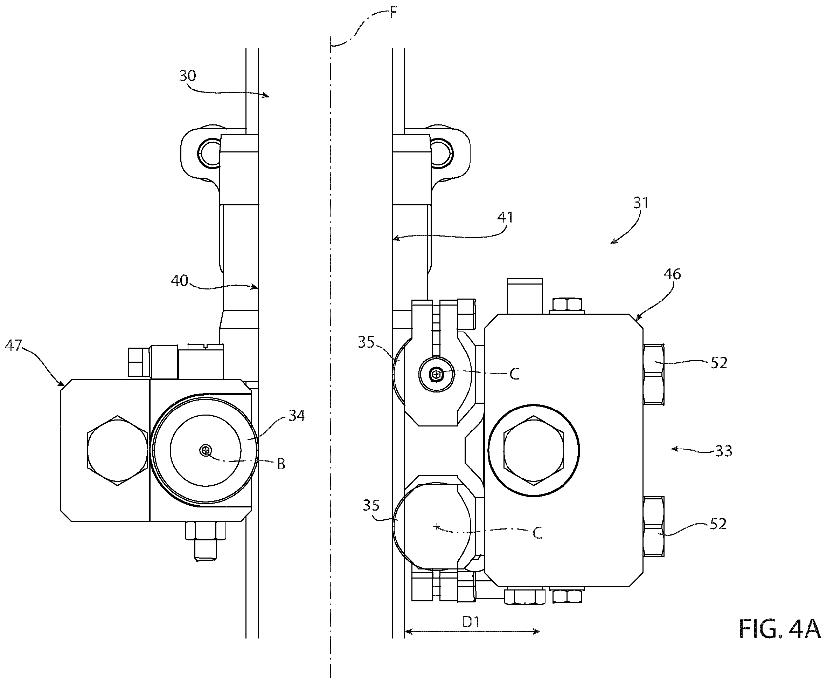

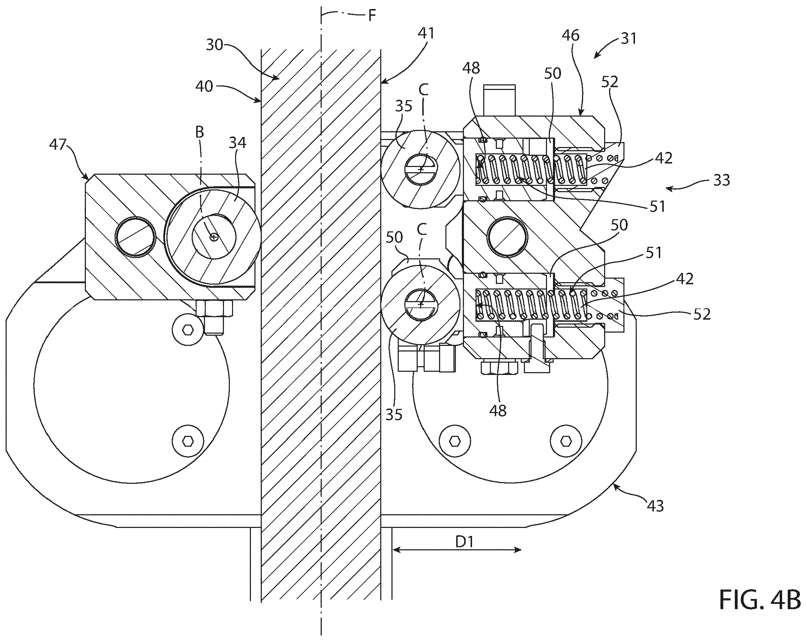

With particular reference to Figures 4A and 4B, each second wheel 35 may be interposed between the respective second guide 35 and the respective elastic element 42.

According to some preferred non-limiting embodiments, each second coupling structure 33 may further comprise a respective support plate 43.

Preferentially, each first wheel 34 and each second wheel 35 may be coupled to the respective support plate 43.

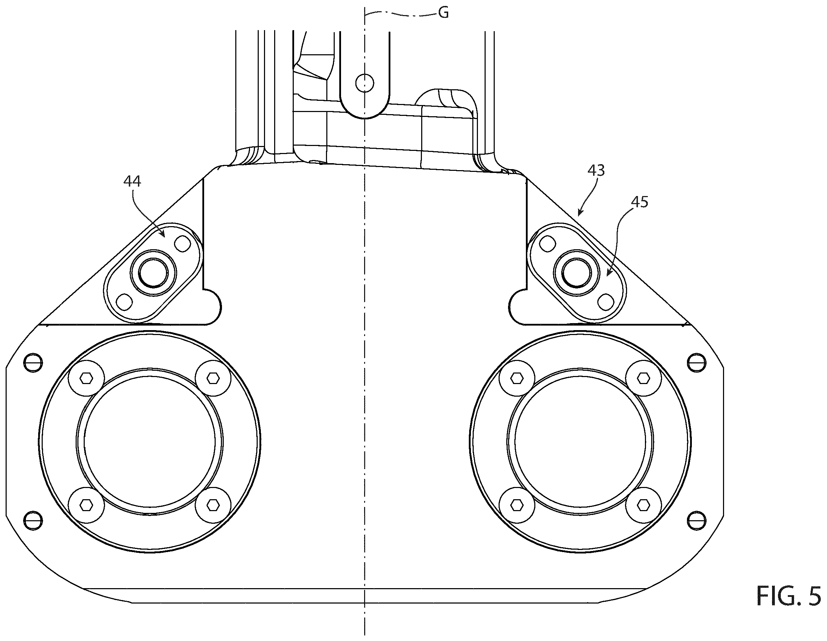

According to some preferred non-limiting embodiments and with particular reference to Figure 5, each first wheel 34 may be fixed with respect to the respective support plate 43, i.e. first wheel 34 may rotate with respect to the respective support plate 43 but may not linearly move away from the respective support plate 43.

Moreover, each first wheel 34 may not move with respect to a portion of the second coupling structure 33 (besides any rotation) towards or away from the respective second wheels 35.

With particular reference to Figure 5, each support plate 43 may have a first connecting area 44 and a second connecting area 45.

Preferentially, each first wheel 34 may be connected to the respective first connecting area 44 and each second wheel 35 may be connected to the respective second connecting area 45.

More preferentially, each first connecting area 44 and the respective second connecting area 45 may comprise fixing points, which permit the connection of each first wheel 34 and each second wheel 35 to the respective first connecting area 44 and the respective second connecting area 45, respectively.

According to some preferred non-limiting embodiments, each first connecting area 44 and the respective second connecting area 45 may be mirror symmetric with respect to a respective symmetry axis G. In particular, the respective fixing points are mirror symmetric.

Preferentially, each first connecting area 44 may correspond to the respective second connecting area 45, i.e. each first connecting area 44 including the respective fixing points may have the same shape and/or configuration and/or arrangement as the respective second connecting area 45 including the respective fixing points.

This is advantageous as in some operational modes of packaging machine 1, preferentially due to the specific operation that the one or more operative devices 25 have to perform on tube 4, there may be the need to connect the respective one or more second wheels 35 to first connecting area 44 and to connect the respective first wheel 34 to the respective second connecting area 45.

This is easily possible since first connecting area 44 and second connecting area 45 are mirror symmetric with respect to symmetry axis G and also owing to the fact that the first connecting area 44 has the same shape and/or configuration and/or arrangement as the respective second connecting area 45.

In further detail, each second coupling structure 33 may comprise a housing 46, and preferentially a further housing 47 and the respective second wheels 35 may be connected to the respective housing 46, and preferentially the respective first wheel 34 may be connected to the respective further housing 47.

Moreover, each housing 46 may be connected to the respective second connecting area 45 so as to connect the respective second wheels 35 to the respective second connecting area 45. In analogy, each further housing 47 may be connected to the respective first connecting area 44 so as to connect the respective first wheel 34 to the respective first connecting area 44.

In this way, it is possible to connect each first wheel 34 to the respective first connecting area 44 and the respective second wheel 35 to the respective second connecting area 45 or, if desired, each first wheel 34 to the respective second connecting area 45 and the respective second wheel 35 to the respective first connecting area 44.

More specifically, each housing 46 and each further housing 47 may be connected to the respective second connecting area 45 and the respective first connecting area 44, respectively, by means of the respective fixing points.

According to some possible non-shown embodiments, each housing 46 may be connected and/or connectable to the respective first connecting area 44 and each further housing 47 may be connected and/or connectable to the respective second connecting area 45.

According to some preferred non-limiting embodiments and with particular reference to Figure 4B, each housing 46 may comprise an abutment surface 48 and an engagement surface facing one another. Moreover, each elastic element 42 may abut against one respective abutment surface 48 and the respective engagement surface. Preferentially, each elastic element 42 may be interposed between the respective abutment surface 48 and the respective engagement surface.

With particular reference to Figure 4B, each second coupling structure 33 may further comprise one or more coupling elements 50, each one rotatably carrying one respective second wheel 35. Preferentially, each coupling structure 33 carries a single coupling element 50.

Preferentially, each second wheel 35 may be connected to a first end of the respective coupling element 50.

Moreover, each coupling element 50 may be movable along a rectilinear direction, in particular parallel to the respective movement direction D1. Preferentially, each coupling element 50 may be movable towards and away from the respective second guide 30 and/or the respective first wheel 34.

Preferentially, each elastic element 42 may be associated to the respective coupling element 50 and being configured to allow for movement of the respective coupling element 50 along the respective rectilinear direction.

In particular, each second wheel 35 may, in use, move towards and away from the respective second guide 30 as a consequence of the linear movement of coupling element 50.

More specifically, each second coupling structure 33, preferentially the respective coupling element 50, may comprise a housing space 51 and at least a portion of the respective elastic element 42 may be arranged within the respective housing space 51.

According to some preferred non-limiting embodiments, each coupling element 50 may comprise the respective abutment surface 48. Preferentially, the respective abutment surface 48 may delimit the respective housing space 51.

In more detail, each coupling element 50 may comprise a main portion having the respective housing space 51 and being (integrally) connected to the respective first end.

More specifically, each main portion may comprise a hollow section defining the respective housing space 51.

According to some preferred non-limiting embodiments, each coupling element 50 may be arranged within the respective housing 46.

Preferentially, each housing 46 may comprise at least one inlet opening allowing to feed a lubricant into the respective housing 46 so as to lubricate each coupling element 50. More preferentially, each housing 46 may also comprise one or more channels fluidically connected to the at least one inlet opening and configured to distribute the lubricant within the respective housing 46.

According to some preferred non-limiting embodiments, each second coupling structure 33 may also comprise one or more fastening elements 52, each one interacting with one respective elastic element 42 and locking the respective elastic element 42 within the respective housing space 51.

Preferentially, each fastening element 52 may be removably coupled to, preferentially fastened to, the respective housing 46.

In further detail, each housing 46 may comprise a respective housing seat for the respective fastening element 52.

More specifically, each fastening element 52 may comprise a first interaction element and the respective housing seat a second interaction element. Interaction between the first interaction element and the second interaction element allows to removably fasten fastening element 52 to the respective housing 46. According to the shown non-limiting example, each fastening element 52 comprises a first threading and the respective housing seat a second threading so as to removably fasten fastening element 52 to the respective housing 46.

According to some possible non-limiting embodiments, each fastening element 52 may comprise the respective engagement surface.

According to the preferred non-limiting embodiment shown, each second coupling structure 30 comprises two second wheels 35 spaced apart from one another. The respective first wheel 34 contacts the respective second guide 30 at a first relative position and the respective second wheels 35 contact the respective second guide 30 at respective second relative positions. In particular, each relative first position and the respective relative second positions are dynamic, i.e. the respective relative first position and the respective relative second positions move together with the movement of the respective second coupling structure 33.

Moreover, according to the non-limiting example shown, each first wheel 34 and the respective second wheels 35 are arranged such that imaginary lines connecting the respective first relative position and the respective second relative positions with one another define an imaginary triangle. In particular, a first imaginary line connects the two second relative positions with one another, a second imaginary line connects one of the two second relative positions with the first relative position and a third imaginary line connects the other one of the two second relative positions with the first relative position.

In other words, considering a projection in two dimensions, in particular in a plane having first central axis E and second central axis F, each first relative position is interposed between the respective second relative positions or, in even other words, each first wheel 34 is interposed between the respective second wheels 35.

With particular reference to Figure 3, each first coupling structure 32 may comprises a housing shell 56 surrounding and being movable along the respective first guide 32.

According to some preferred non-limiting embodiments, each support device 31 may also comprise a connecting structure 57 connected to the respective first coupling structure 32 and the respective second coupling structure 33.

In more detail, each connecting structure 57 may be interposed between the respective first guide 29 and the respective second guide 30.

According to some preferred non-limiting embodiments, conveying unit may be configured to linearly move each support device 31 parallel to the respective first guide 29 and the respective second guide 30 so as to move the respective operative devices 25 along the respective paths.

Moreover, advancement of each support device 31 is determined by the respective first coupling structure 32 and the respective second coupling structure 33 moving along first guide 29 and second guide 30, respectively.

In further detail, conveying unit may be configured to move first coupling structure 32 and second coupling structure 33 back and forth along the respective first guides 29 and the respective second guides 30, respectively.

Moreover, in use, each first coupling structure 32 and the respective second coupling structure 33 may linearly move back and forth.

According to some preferred non-limiting embodiments, each cutting assembly may comprise a cutting element, e.g. a blade, configured to transversally cut tube 4, preferentially along the respective transversal main sealing band.

With particular reference to Figure 2, each sealing assembly 26 may comprise a sealing element 58 and a counter-sealing element 59 configured to seal in cooperation within one another tube 4, preferentially for creating the respective transversal main sealing band.

More specifically, each sealing element 58 and the respective counter-sealing element 59 may be configured to at least transversally compress, in particular flat-lay and squeeze, and to transversally seal tube 4, in particular during advancement of tube 4 along tube advancement path Q.

Moreover, each sealing element 58 and the respective counter-sealing element 59 may be configured to engage tube 4 from opposite sides thereof.

In further detail, each sealing element 58 may comprise a source configured to generate the energy needed to obtain the sealing effect. For example, sealing element 58 may be a sonotrode having ultrasound-emitters or sealing element 58 may have an electromagnetic induction source.

Each counter-sealing element 59 may be a passive element (i.e. not having an active source). For example counter-sealing element 59 may be a metal anvil or a deformable pad.

In further detail and with particular reference to Figure 2, each operative device 25 may comprise at least a first operative group 60 and a second operative group 61 configured to cooperate with the respective first operative group 60 so as to at least transversally seal, and preferentially cut and also at least partially form, tube 4.

According to some preferred non-limiting embodiments, each first operative group 60 may comprise the respective sealing element 58 and the respective second operative group 61 may comprise the respective counter-sealing element 59.

According to some possible non-limiting embodiments, each second operative group 61 may also comprise the respective cutting element 29.

Preferentially, one of the respective first operative group 60 and the respective second operative group 61 of each operative device 25 may comprise and/or carry the respective cutting element 29.

Moreover, each first operative group 60 and the respective second operative group 61 may be connected to the respective support device 31.

According to some preferred non-limiting embodiments, each operative device 25 may comprise a connecting assembly connected to the respective support device 31, preferentially to the connecting structure 57.

Preferentially, each first operative group 60 and the respective second operative group 61 may be connected to the respective connecting assembly. More preferentially, each respective first operative group 60 and the respective second operative group 61 may laterally protrude from the respective connecting assembly, in particular such that each first operative group 60 and the respective second operative group 60 may be arranged inside the space within which, in use, tube 4 advances.

Moreover, the space may be interposed between the respective support assemblies 28. In further detail, the space may be interposed between the two respective first guides 29.

According to some preferred non-limiting embodiments, each operative device 25 may be controlled between an active configuration, in which the respective first operative group 60 and the respective second operative group 61 are moved towards one another for sealing, and preferentially cutting and forming tube 4, and a rest configuration, in which the respective first operative group 60 and the respective second operative group 61 are withdrawn from one another.

Moreover, conveying unit may be configured to advance each support device 31 (back and forth along a direction parallel to the respective first guide 29 and the respective second guide 30) so as to advance first operative groups 60 along a first advancement path and second operative groups 61 along a second advancement path.

Moreover, each first operative group 60 and the respective second operative group 61 may be configured to cooperate with one another for forming a package 2 when advancing along a respective operative section of the first advancement path and the second advancement path, respectively.

Additionally, each one of the first advancement path and the second advancement path may also comprise a respective return section, which allow to return first operative groups 60 and second operative groups 61 back to the respective operative section.

It should be noted that during advancement along the respective return sections, the respective operation devices 25 are in the rest configuration, while during advancement along the respective operative section, the respective operative devices 25 may be controlled in the respective active configuration.

According to some preferred non-limiting embodiments, each forming shell assembly may at least comprise a first half-shell (not shown and known as such) and a second half-shell (not shown and known as such) configured to at least partially define in cooperation with one another the shape of packages 2. Preferentially, each first half-shell and the respective second half-shell may be configured to contact tube 4 from opposite sides thereof.

According to some preferred non-limiting embodiments one of the first half-shell and second half-shell may be coupled to first operative group 60 and the other one of the first half-shell and the second half-shell may be coupled to second operative group 61.

According to some preferred non-limiting embodiments one of the first half-shell and second half-shell may be coupled to sealing element 58 and the other one of the first half-shell and the second half-shell may be coupled to counter-sealing element 47.

In use, packaging machine 1 produces packages 2 filled with the pourable product.

In more detail, conveying device 11 advances web 3 along web advancement path P. Tube forming and sealing device 12 forms tube 4 from the advancing web 3 and longitudinally seals tube 4. Additionally, filling device 13 fills tube 4 with the pourable product and package forming apparatus 10 forms, transversally seals and transversally cuts tube 4 so as to obtain packages 2.

In further detail, during operation of package forming apparatus 10, operative devices 25 transversally seal, and preferentially cut tube 4, in particular through the respective transversal main sealing band, for obtaining respective filled packages 2. Preferentially, operative devices 25 also form tube 4.

Moreover, during operation of package forming apparatus 10, the conveying unit linearly moves support devices 31 so as to advance operative device 25, in particular the respective first operative group 60 and the respective second operative group 61.

During movement of support devices 31, the respective first coupling portions 32 and the respective second coupling portions 33 move along the respective first guide 29 and the respective second guide 30.

The advantages of package forming apparatus 10 and/or packaging machine 1 according to the present invention will be clear from the foregoing description.

In particular, since each second coupling structure 30 has the respective first wheel 34, one or more second wheels 35 and at least one elastic element 42 it is possible to reduce formation of wear.

A further advantage resides in a reduction of bouncing effects and/or noise.

An even other advantage can be seen in a better control of the transversal sealing and/or cutting of tube 4 over time, in particular due to reduced wear.

Moreover, the Applicant has observed that support devices 31 allow to be easier handled, in particular as second coupling structure 33 can be mounted more easily. An operator, in fact, can mount and lock elastic elements 42 once second coupling structure 33 has been coupled to second guide 30.

Another advantage resides in that operation of the conveying unit is facilitated.

Clearly, changes may be made to package forming apparatus 10 and/or packaging machine 1 as described herein without, however, departing from the scope of protection as defined in the accompanying claims.

## Claims

1. Package forming apparatus (10) for a packaging machine (1), the package forming apparatus (10) being configured to at least transversally seal a tube (4) for obtaining packages (2) from the tube (4);
wherein the package forming apparatus (10) comprises at least:
- one operative device (25) configured to transversally seal the tube (4); and
- a support structure (27) movably carrying the operative device (25);
wherein the support structure (27) comprises:
- a first guide (29);
- a second guide (30) spaced apart from the first guide (29); and
- at least one support device (31) movably coupled to the first guide (29) and the second guide (30) and carrying the at least one operative device (25);
wherein the support device (31) comprises at least:
- a first coupling structure (32) and a second coupling structure (33) coupling the support device (31) to the first guide (29) and the second guide (30) respectively;
**characterized in that** the second coupling structure (33) comprises at least a first wheel (34) rotatable about a first rotation axis (B) and one or more second wheels (35), each second wheel (35) being rotatable about a respective second rotation axis (C);
wherein the first wheel (34) and each second wheel (35) are arranged such to contact the second guide (30) from opposite sides thereof;
wherein the second coupling structure (33) also comprises one or more elastic elements (42), each one coupled to one respective second wheel (35) and being configured to elastically couple the respective second wheel (35) to the second guide (30).

2. Package forming apparatus according to claim 1, wherein each second wheel (35) is linearly movable towards or away from the first wheel (34).

3. Package forming apparatus according to claim 2, wherein the first wheel (34) is not movable with respect to a portion of the second coupling structure (33) towards or away from the respective second wheels (35).

4. Package forming apparatus according to any one of the preceding claims, wherein each second wheel (35) is interposed between the second guide (30) and the respective elastic element (42).

5. Package forming apparatus according to any one of the preceding claims, wherein the second coupling structure (33) further comprises one or more coupling elements (50), each one rotatably carrying one respective second wheel (35);
wherein each coupling element (50) is movable along a rectilinear direction (D1);
wherein each elastic element (42) is connected to the respective coupling element (50) and is configured to allow for movement of the respective coupling element (50) along the rectilinear direction (D1).

6. Package forming apparatus according to claim 5, wherein each coupling element (50) comprises a housing space (51);
wherein at least a portion of the respective elastic element (42) is arranged within the housing space (51).

7. Package forming apparatus according to claim 5 or 6, wherein each coupling element (50) comprises an abutment surface (48) and the respective elastic element (42) abuts against the respective abutment surface (48).

8. Package forming apparatus according to any one of claims 5 to 7, wherein the second coupling structure (33) comprises a housing (46) and each coupling element (50) is arranged within the housing (46);
wherein the housing (46) comprises an inlet opening allowing to feed a lubricant into the housing (46) so as to lubricate each coupling element (50).

9. Package forming apparatus according any one of the preceding claims, wherein the second coupling structure (33) comprises one or more housing spaces (51);
wherein at least a portion of each elastic element (42) is arranged within a respective housing space (51);
wherein the second coupling structure (33) also comprises one or more fastening elements (52), each fastening element (52) interacting with one respective elastic element (42) and locking the respective elastic element (42) within the respective housing space (51).

10. Package forming apparatus according to claim 9, wherein each fastening element (52) comprises an engagement surface and the respective elastic element (42) abuts against the respective engagement surface.

11. Package forming apparatus according to any one of the preceding claims, wherein the second coupling structure (33) comprises two second wheels (35) spaced apart from one another;
wherein the first wheel (34) contacts the second guide (30) at a first relative position and each second wheel (35) contacts the second guide (30) at a respective second relative position;
wherein the first wheel (34) and the second wheels (35) are arranged such that imaginary lines connecting the first relative position and the respective second relative positions with one another define an imaginary triangle.

12. Package forming apparatus according to any one of the preceding claims, wherein the second coupling structure (33) further comprises a support plate (43);
wherein the support plate (43) has a first connecting area (44) and a second connecting area (45);
wherein the first wheel (34) is connected to the first connecting area (44) and each second wheel (35) is connected to the second connecting area (45);
wherein the first connecting area (44) and the second connecting area (45) are mirror symmetric with respect to a respective symmetry axis (G).

13. Package forming apparatus according to any one of the preceding claims, wherein the first coupling structure (32) comprises a housing shell (56) surrounding and being movable along the first guide (29).

14. Package forming apparatus according to any one of the preceding claims, wherein the operative device (25) comprises at least a first operative group (60) and a second operative group (61) configured to cooperate with the first operative group (60) so as to transversally seal the tube (4);
wherein one of the first operative group (60) and the second operative group (61) comprises and/or carries a sealing element (58) and the other one of first operative group (60) and the second operative group (61) comprises and/or carries a counter-sealing element (59).

15. Packaging machine (1) for forming packages (2) of a pourable product from an advancing tube (4) formed and longitudinally sealed from a web of packaging material (4) ;
the packaging machine (1) comprises:
- a conveying device (11) configured to advance the web of packaging material (3) along a web advancement path (P) and for advancing the tube (4) along a tube advancement path (Q);
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to any one of the preceding claims.

## Patentansprüche

1. Verpackungserzeugungsvorrichtung (10) für eine Verpackungsmaschine (1), wobei die Verpackungserzeugungsvorrichtung (10) konfiguriert ist, einen Schlauch (4) mindestens quer zu verschließen, um Verpackungen (2) aus dem Schlauch (4) zu erhalten;
wobei die Verpackungserzeugungsvorrichtung (10) mindestens Folgendes umfasst:
- eine Arbeitseinrichtung (25), die konfiguriert ist, den Schlauch (4) quer zu verschließen; und
- eine Stützstruktur (27), die die Arbeitseinrichtung (25) beweglich trägt;
wobei die Stützstruktur (27) Folgendes umfasst:
- eine erste Führung (29);
- eine zweite Führung (30), die von der ersten Führung (29) beabstandet ist; und
- mindestens eine Stützeinrichtung (31), die mit der ersten Führung (29) und mit der zweiten Führung (30) beweglich gekoppelt ist und die mindestens eine Arbeitseinrichtung (25) trägt;
wobei die Stützeinrichtung (31) mindestens Folgendes umfasst:
- eine erste Kopplungsstruktur (32) und eine zweite Kopplungsstruktur (33), die die Stützeinrichtung (31) mit der ersten Führung (29) bzw. mit der zweiten Führung (30) koppeln;
**dadurch gekennzeichnet, dass** die zweite Kopplungsstruktur (33) mindestens ein erstes Rad (34), das um eine erste Drehachse (B) drehbar ist, und ein oder mehrere zweite Räder (35), wobei jedes zweite Rad (35) um eine jeweilige zweite Drehachse (C) drehbar ist, umfasst;
wobei das erste Rad (34) und das zweite Rad (35) in der Weise angeordnet sind, dass sie die zweite Führung (30) von gegenüberliegenden Seiten davon berühren;
wobei die zweite Kopplungsstruktur (33) außerdem ein oder mehrere elastische Elemente (42) umfasst, wobei jedes mit einem jeweiligen zweiten Rad (35) gekoppelt ist und konfiguriert ist, das jeweilige zweite Rad (35) mit der zweiten Führung (30) elastisch zu koppeln.

2. Verpackungserzeugungsvorrichtung nach Anspruch 1, wobei jedes zweite Rad (35) in Richtung des ersten Rads (34) oder von ihm weg linear beweglich ist.

3. Verpackungserzeugungsvorrichtung nach Anspruch 2, wobei das erste Rad (34) nicht in Bezug auf einen Abschnitt der zweiten Kopplungsstruktur (33) in Richtung der jeweiligen zweiten Räder (35) oder von ihnen weg beweglich ist.

4. Verpackungserzeugungsvorrichtung nach einem der vorhergehenden Ansprüche, wobei jedes zweite Rad (35) zwischen der zweiten Führung (30) und dem jeweiligen elastischen Element (42) eingefügt ist.

5. Verpackungserzeugungsvorrichtung nach einem der vorhergehenden Ansprüche, wobei die zweite Kopplungsstruktur (33) ferner ein oder mehrere Kopplungselemente (50) umfasst, wobei jedes ein jeweiliges zweites Rad (35) drehbar trägt;
wobei jedes Kopplungselement (50) entlang einer geradlinigen Richtung (D1) beweglich ist;
wobei jedes elastische Element (42) mit dem jeweiligen Kopplungselement (50) verbunden ist und konfiguriert ist, die Bewegung des jeweiligen Kopplungselements (50) entlang der geradlinigen Richtung (D1) zuzulassen.

6. Verpackungserzeugungsvorrichtung nach Anspruch 5, wobei jedes Kopplungselement (50) einen Aufnahmeraum (51) umfasst;
wobei mindestens ein Abschnitt des jeweiligen elastischen Elements (42) in dem Aufnahmeraum (51) angeordnet ist.

7. Verpackungserzeugungsvorrichtung nach Anspruch 5 oder 6, wobei jedes Kopplungselement (50) eine Anlagefläche (48) umfasst und das jeweilige elastische Element (42) an der jeweiligen Anlagefläche (48) anliegt.

8. Verpackungserzeugungsvorrichtung nach einem der Ansprüche 5 bis 7, wobei die zweite Kopplungsstruktur (33) ein Gehäuse (46) umfasst und wobei jedes Kopplungselement (50) in dem Gehäuse (46) angeordnet ist; wobei das Gehäuse (46) eine Einlassöffnung umfasst, die das Zuführen eines Schmiermittels in das Gehäuse (46), um jedes Kopplungselement (50) zu schmieren, zulässt.

9. Verpackungserzeugungsvorrichtung nach einem der vorhergehenden Ansprüche, wobei die zweite Kopplungsstruktur (33) ein oder mehrere Aufnahmeräume (51) umfasst;
wobei mindestens ein Abschnitt jedes elastischen Elements (42) in einem jeweiligen Aufnahmeraum (51) angeordnet ist;
wobei die zweite Kopplungsstruktur (33) außerdem ein oder mehrere Befestigungselemente (52) umfasst, wobei jedes Befestigungselement (52) mit einem jeweiligen elastischen Element (42) in Wechselwirkung tritt und das jeweilige elastische Element (42) in dem jeweiligen Aufnahmeraum (51) verriegelt.

10. Verpackungserzeugungsvorrichtung nach Anspruch 9, wobei jedes Befestigungselement (52) eine Eingriffsfläche umfasst und wobei das jeweilige elastische Element (42) an der jeweiligen Eingriffsfläche anliegt.

11. Verpackungserzeugungsvorrichtung nach einem der vorhergehenden Ansprüche, wobei die zweite Kopplungsstruktur (33) zwei zweite Räder (35), die voneinander beabstandet sind, umfasst;
wobei das erste Rad (34) die zweite Führung (30) an einer ersten relativen Stelle berührt und jedes zweite Rad (35) die zweite Führung (30) an einer jeweiligen zweiten relativen Stelle berührt;
wobei das erste Rad (34) und die zweiten Räder (35) in der Weise angeordnet sind, dass gedachte Linien, die die erste relative Stelle und die jeweiligen zweiten relativen Stellen miteinander verbinden, ein gedachtes Dreieck definieren.

12. Verpackungserzeugungsvorrichtung nach einem der vorhergehenden Ansprüche, wobei die zweite Kopplungsstruktur (33) ferner eine Stützplatte (43) umfasst;
wobei die Stützplatte (43) einen ersten Verbindungsbereich (44) und einen zweiten Verbindungsbereich (45) aufweist;
wobei das erste Rad (34) mit dem ersten Verbindungsbereich (44) verbunden ist und jedes zweite Rad (35) mit dem zweiten Verbindungsbereich (45) verbunden ist;
wobei der erste Verbindungsbereich (44) und der zweite Verbindungsbereich (45) in Bezug auf eine jeweilige Symmetrieachse (G) spiegelsymmetrisch sind.

13. Verpackungserzeugungsvorrichtung nach einem der vorhergehenden Ansprüche, wobei die erste Kopplungsstruktur (32) eine Gehäusekapsel (56), die die erste Führung (29) umgibt und ihr entlang beweglich ist, umfasst.

14. Verpackungserzeugungsvorrichtung nach einem der vorhergehenden Ansprüche, wobei die Arbeitseinrichtung (25) mindestens eine erste Arbeitsgruppe (60) und eine zweite Arbeitsgruppe (61), die konfiguriert ist, mit der ersten Arbeitsgruppe (60) in Wechselwirkung zu treten, um den Schlauch (4) quer zu verschließen, umfasst; wobei die erste Arbeitsgruppe (60) oder die zweite Arbeitsgruppe (61) ein Verschlusselement (58) umfasst und/oder trägt und die andere der ersten Arbeitsgruppe (60) und der zweiten Arbeitsgruppe (61) ein Gegenverschlusselement (59) umfasst und/oder trägt.

15. Verpackungsmaschine (1) zum Erzeugen von Verpackungen (2) eines gießfähigen Erzeugnisses aus einem sich fortbewegenden Schlauch (4), der aus einer Bahn eines Verpackungsmaterials (4) erzeugt und in Längsrichtung verschlossen wird;
wobei die Verpackungsmaschine (1) Folgendes umfasst:
- eine Fördereinrichtung (11), die konfiguriert ist, die Bahn des Verpackungsmaterials (3) entlang eines Bahnfortbewegungswegs (P) fortzubewegen, und zum Fortbewegen des Schlauchs (4) entlang eines Schlauchfortbewegungswegs (Q);
- eine Schlaucherzeugungs- und Schlauchverschlusseinrichtung (12), die konfiguriert ist, den Schlauch (4) aus der Bahn des Verpackungsmaterials (3) zu erzeugen und den Schlauch (4) in Längsrichtung zu verschließen;
- eine Fülleinrichtung (13) zum Befüllen des Schlauchs (4) mit dem gießfähigen Erzeugnis; und
- eine Verpackungserzeugungsvorrichtung (10) nach einem der vorhergehenden Ansprüche.

## Revendications

1. Appareil (10) de formation d'emballages destiné à une machine (1) d'emballage, l'appareil (10) de formation d'emballages étant configuré pour sceller au moins transversalement un tube (4) en vue d'obtenir des emballages (2) à partir du tube (4) ;
dans lequel l'appareil (10) de formation d'emballages comprend au moins :
- un dispositif fonctionnel (25) configuré pour sceller transversalement le tube (4) ; et
- une structure de support (27) portant de manière mobile le dispositif fonctionnel (25) ;
dans lequel la structure de support (27) comprend :
- un premier guide (29) ;
- un second guide (30) espacé du premier guide (29) ; et
- au moins un dispositif de support (31) couplé de manière mobile au premier guide (29) et au second guide (30) et portant l'au moins un dispositif fonctionnel (25) ;
dans lequel le dispositif de support (31) comprend au moins :
- une première structure de couplage (32) et une seconde structure de couplage (33) couplant le dispositif de support (31) au premier guide (29) et au second guide (30) respectivement ;
**caractérisé en ce que** la seconde structure de couplage (33) comprend au moins une première roue (34) pouvant entrer en rotation autour d'un premier axe de rotation (B) et une ou plusieurs secondes roues (35), chaque seconde roue (35) pouvant entrer en rotation autour d'un second axe de rotation (C) respectif ;
dans lequel la première roue (34) et chaque seconde roue (35) sont agencées de manière à entrer en contact avec le second guide (30) à partir de côtés opposés de celui-ci ;
dans lequel la seconde structure de couplage (33) comprend également un ou plusieurs éléments élastiques (42), chacun couplé à une seconde roue (35) respective et étant configuré pour coupler élastiquement la seconde roue (35) respective au second guide (30).

2. Appareil de formation d'emballages selon la revendication 1, dans lequel chaque seconde roue (35) est déplaçable linéairement en direction ou à l'écart de la première roue (34).

3. Appareil de formation d'emballages selon la revendication 2, dans lequel la première roue (34) n'est pas mobile par rapport à une partie de la seconde structure de couplage (33) en direction ou à l'écart des secondes roues (35) respectives.

4. Appareil de formation d'emballages selon l'une quelconque des revendications précédentes, dans lequel chaque seconde roue (35) est interposée entre le second guide (30) et l'élément élastique (42) respectif.

5. Appareil de formation d'emballages selon l'une quelconque des revendications précédentes, dans lequel la seconde structure de couplage (33) comprend en outre un ou plusieurs éléments de couplage (50), chacun portant de manière rotative une seconde roue (35) respective ;
dans lequel chaque élément de couplage (50) est mobile le long d'une direction rectiligne (D1) ;
dans lequel chaque élément élastique (42) est raccordé à l'élément de couplage (50)respectif et est configuré pour permettre le déplacement de l'élément de couplage (50) respectif le long de la direction rectiligne (D1).

6. Appareil de formation d'emballage selon la revendication 5, dans lequel chaque élément de couplage (50) comprend un espace de logement (51) ;
dans lequel au moins une partie de l'élément élastique (42) respectif est agencée à l'intérieur de l'espace de logement (51).

7. Appareil de formation d'emballage selon la revendication 5 ou la revendication 6, dans lequel chaque élément de couplage (50) comprend une surface de butée (48) et l'élément élastique (42) respectif vient en butée contre la surface de butée (48) respective.

8. Appareil de formation d'emballages selon l'une quelconque des revendications 5 à 7, dans lequel la seconde structure de couplage (33) comprend un logement (46) et chaque élément de couplage (50) est agencé à l'intérieur du logement (46) ;
dans lequel le logement (46) comprend une ouverture d'entrée permettant d'introduire un lubrifiant dans le logement (46) de manière à lubrifier chaque élément de couplage (50).

9. Appareil de formation d'emballages selon l'une quelconque des revendications précédentes, dans lequel la seconde structure de couplage (33) comprend un ou plusieurs espaces de logement (51) ;
dans lequel au moins une partie de chaque élément élastique (42) est agencée à l'intérieur d'un espace de logement (51) respectif ;
dans lequel la seconde structure de couplage (33) comprend également un ou plusieurs éléments de fixation (52), chaque élément de fixation (52) interagissant avec un élément élastique (42) respectif et verrouillant l'élément élastique (42) respectif à l'intérieur de l'espace de logement (51) respectif.

10. Appareil de formation d'emballages selon la revendication 9, dans lequel chaque élément de fixation (52) comprend une surface de mise en prise et l'élément élastique (42) respectif vient en butée contre la surface de mise en prise respective.

11. Appareil de formation d'emballages selon l'une quelconque des revendications précédentes, dans lequel la seconde structure de couplage (33) comprend deux secondes roues (35) espacées l'une de l'autre ;
dans lequel la première roue (34) entre en contact avec le second guide (30) au niveau d'une première position relative et chaque seconde roue (35) entre en contact avec le second guide (30) au niveau d'une seconde position relative respective ;
dans lequel la première roue (34) et les secondes roues (35) sont agencées de telle sorte que des lignes imaginaires raccordant la première position relative et les secondes positions relatives respectives définissent entre elles un triangle imaginaire.

12. Appareil de formation d'emballages selon l'une quelconque des revendications précédentes, dans lequel la seconde structure de couplage (33) comprend en outre une plaque de support (43) ;
dans lequel la plaque de support (43) a une première zone de raccordement (44) et une seconde zone de raccordement (45) ;
dans lequel la première roue (34) est raccordée à la première zone de raccordement (44) et chaque seconde roue (35) est raccordée à la seconde zone de raccordement (45) ;
dans lequel la première zone de raccordement (44) et la seconde zone de raccordement (45) sont en symétrie bilatérale par rapport à un axe de symétrie (G) respectif.

13. Appareil de formation d'emballages selon l'une quelconque des revendications précédentes, dans lequel la première structure de couplage (32) comprend une enveloppe de logement (56) entourant le, et étant déplaçable le long du, premier guide (29).

14. Appareil de formation d'emballages selon l'une quelconque des revendications précédentes, dans lequel le dispositif fonctionnel (25) comprend au moins un premier groupe fonctionnel (60) et un second groupe fonctionnel (61) configuré pour coopérer avec le premier groupe fonctionnel (60) de manière à sceller transversalement le tube (4) ;
dans lequel l'un du premier groupe fonctionnel (60) du second groupe fonctionnel (61) comprend et/ou porte un élément de scellement (58) et l'autre du premier groupe fonctionnel (60) et du second groupe fonctionnel (61) comprend et/ou porte un élément de contre-scellement (59) .

15. Machine (1) d'emballage pour former des emballages (2) d'un produit versable à partir d'un tube avançant (4) formé et scellé longitudinalement à partir d'une bande de matériau d'emballage (4) ;
la machine (1) d'emballage comprend :
- un dispositif d'acheminement (11) configuré pour faire avancer la bande de matériau d'emballage (3) le long d'un chemin d'avancement de bande (P) et pour faire avancer le tube (4) le long d'un chemin d'avancement de tube (Q) ;
- un dispositif de formation et de scellement de tube (12) configuré pour former le tube (4) à partir de la bande de matériau d'emballage (3) et pour sceller longitudinalement le tube (4) ;
- un dispositif de remplissage (13) pour remplir le tube (4) avec le produit versable ; et
- un appareil de formation d'emballages (10) selon l'une quelconque des revendications précédentes.
